## Europäisches Patentamt
## European Patent Office
## Office européen des brevets

(19)

(11) Veröffentlichungsnummer: **0 204 347**
**A2**

(12)

# EUROPÄISCHE PATENTANMELDUNG

(21) Anmeldenummer: **86107748.5**

(22) Anmeldetag: **06.06.86**

(51) Int. Cl.⁴: **G 02 C 7/04**

(30) Priorität: **07.06.85 DE 3520346**

(43) Veröffentlichungstag der Anmeldung:
**10.12.86  Patentblatt  86/50**

(84) Benannte Vertragsstaaten:
**DE IT NL SE**

(71) Anmelder: **Firma Carl Zeiss**

**D-7920 Heidenheim (Brenz)(DE)**

(72) Erfinder: **Grimm, Wolfgang, Dr.**
**Max-Beckmann-Strasse 59**
**D-7920 Heidenheim(DE)**

(72) Erfinder: **Winter, Karl-Heinz**
**Volkmarsweg 28**
**D-7080 Aalen-Hofherrnweiler(DE)**

(72) Erfinder: **Polzhofer, Kurt, Dr.**
**Ringenrade 15**
**D-2314 Schönkirchen(DE)**

(54) **Bereichsweise gefärbte Kontaktlinse.**

(57) Als Hilfsmittel für Patienten, die an Retinitis Pigmentosa erkrankt sind, wird eine Kontaktlinse zur Verfügung gestellt, deren die Kornea des Auges bedeckender Bereich (1) gleichmäßig so gefärbt ist, daß für Wellenlängen 520 nm die Transmission maximal 5% beträgt, danach ansteigt und für Werte 660 nm mindestens 50% erreicht.

Besonders vorteilhaft ist es die Kontaktlinse so zu färben, daß sie einen braunen Farbton erhält. Eine solche Linse übt ihre Schutzfunktion voll aus, verhindert das Eindringen von Streulicht in das Auge des Benutzers und ist kosmetisch voll befriedigend.

Fig. 1

EP 0 204 347 A2

Beschreibung:

## Bereichsweise gefärbte Kontaktlinse

Die vorliegende Erfindung betrifft eine bereichsweise gefärbte
Kontaktlinse.

Es sind seit langem Kontaktlinsen bekannt und im Handel erhältlich, bei denen aus rein kosmetischen Gründen der die Iris
bedeckende Ringbereich gefärbt ist. Dies dient vor allem dem Zweck
die Irisfarbe des Auges zu ändern. Es gibt vielfältige Möglichkeiten solche bereichsweise gefärbten Kontaktlinsen zu
erzeugen. Eine Möglichkeit ist das Bedrucken, wie es beispielsweise aus der US-PS 4 447 474 bekannt ist. Eine andere Möglichkeit
ist das Zusammensetzen einer Kontaktlinse, wie es z.B. aus der
Veröffentlichung WO 83/03 480 bekannt ist.

Bei allen diesen aus kosmetischen Gründen gefärbten Kontaktlinsen
muß der zentrale Bereich über der Augenpupille farblos bleiben, um
Farbverfälschungen für den Beobachter zu vermeiden.

Aus der US-PS 3 586 423 ist es bekannt Farb-Fehlsichtigen, die Rot
und Grün nicht unterscheiden können dadurch zu helfen, daß vor ein
Auge des Patienten eine dünne Kontaktlinse gesetzt wird, die so
eingefärbt ist, daß sie praktisch nur im roten Spektralbereich,
z.B. zwischen den Wellenlängen 500 - 700 nm durchlässig ist. Das
andere Auge des Patienten bleibt frei. Der Patient kann dann nach
einer Lernphase Rot und Grün unterscheiden.

Eine relativ häufig auftretende Krankheit ist die Retinis
Pigmentosa, die im allgemeinen als RP bezeichnet wird. Es handelt
sich dabei um ein degeneratives Netzhautleiden, in dessen Verlauf
die Netzhaut allmählich abstirbt. Dabei degenerieren zuerst die
Stäbchen und später auch die Zäpfchen der Netzhaut. Die Krankheit
führt im frühen Stadium zu einer verschlechterten Dunkeladaption

0204347

und im fortgeschrittenen Zustand zum Gesichtsfeldverfall bis hin
zum stark röhrenförmig eingeschränkten Gesichtsfeld; im Extremfall
kann es zur Erblindung kommen.

Adrian und Schmidt (Klin.Mbl.Augenheilk.164, 1974, S. 744/75)
haben vorgeschlagen den Verlauf der RP-Erkrankung dadurch zu
verlangsamen oder gar zum Stillstand zu bringen, daß vor den Augen
des Patienten Brillenlinsen angeordnet werden, die als Kantenfilter ausgebildet sind und die im kurzwelligen Bereich des
Lichtes die Licht-Transmission sperren. Durch solche Filter mit
einer Kantenlage zwischen 550 und 650 nm wird im höchsten
Empfindlichkeitsbereich der Stäbchen eine Bleichung des Sehpurpurs
verhindert und es wird die Blendung vermindert. Die Durchläßigkeit
solcher Brillenlinsen im langwelligen Bereich des Spektrums ist so
hoch, daß für den Patienten eine ausreichende visuelle Orientierung möglich ist.

Solche Brillenlinsen haben sich bewährt. Um jedoch eine teilweise
Aufhebung ihrer günstigen Wirkung zu vermeiden, ist es erforderlich den seitlichen Streulichteinfall soweit wie irgend
möglich zu dämpfen. Dazu werden die gefärbten Brillenlinsen in
Fassungen eingesetzt, die mit einem Seitenschutz versehen sind.
Solche Fassungen sind ästhetisch höchst unbefriedigend. Man hilft
sich deshalb im allgemeinen dadurch, daß man die RP-Brillenlinsen
mit großem Durchmesser herstellt, sie in große Fassungen einsetzt
und diese möglichst dicht an die Gesichtspartie anpaßt.

Auch eine solche Lösung befriedigt ästhetisch nicht, insbesondere
da die Brillenlinsen infolge ihrer Braun- bis Rotbrauntönung doch
recht dunkel erscheinen.

Es ist nun die Aufgabe der vorliegenden Erfindung Patienten, die
an Retinitis Pigmentosa erkrankt sind ein Hilfsmittel an die Hand
zu geben, das ohne besondere Maßnahmen seine Schutzwirkung voll
entfaltet, das unauffällig getragen werden kann und das damit
ästhetisch voll befriedigt.

Als ein solches Hilfsmittel schlägt die Erfindung eine nach den kennzeichnenden Merkmalen des Anspruchs 1 ausgebildete Kontaktlinse vor.

Eine solche Kontaktlinse ist völlig unauffällig zu tragen und vermeidet störenden und schädlichen Streulichteinfall vollständig.

Besonders vorteilhaft ist es die Kontaktlinse nach der Lehre des Anspruchs 3 auszubilden. Eine solche Linse ist braun getönt, so daß das Auge des Benutzers eine braune Iris zu haben scheint, d.h. eine ganz natürliche Iris-Farbe.

Anspruch 2 beschreibt eine beim Gebrauch sehr unauffällig zu tragende Konaktlinse, Anspruch 4 bezieht sich auf ein Verfahren zur Herstellung einer solchen Linse.

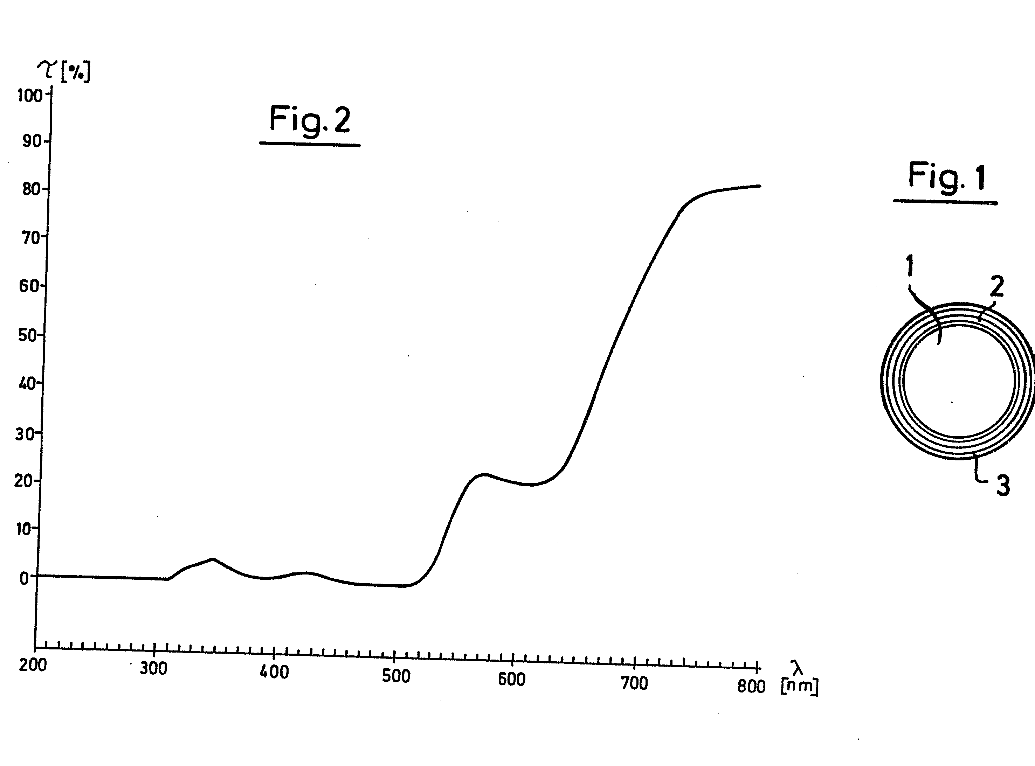

Die Erfindung wird im folgenden anhand der Fig. 1 und 2 näher erläutert. Es zeigen:

Fig. 1    ein Ausführungsbeispiel einer Kontaktlinse nach der
         Erfindung;

Fig. 2    die spektrale Transmission einer Kontaktlinse nach dem
         Beispiel der Fig. 1.

Fig. 1 zeigt eine Kontaktlinse in Draufsicht. Der die Kornea des Auges bedeckende Linsenbereich 1 ist gleichmäßig gefärbt. Außerhalb dieses Bereiches, praktisch im Limbus-Bereich 2 nimmt die Farbsättigung graduell ab und erreicht im ringförmigen Skleral- Bereich 3 den Wert Null, d.h. die Linse ist in ihrem äußeren Bereich ungefärbt.

Die Kontaktlinse kann als Korrekturlinse mit optischer Wirkung oder auch als Filterlinse ohne optische Wirkung ausgebildet sein.

**0204347**

In Fig. 2 ist die Abhängigkeit der Transmission $\tilde{\tau}$ von der Wellenlänge $\lambda$ für eine beispielsweise Färbung einer Kontaktlinse nach der Erfindung dargestellt. Man erkennt, daß die Transmission für Wellenlängen < 520nm maximal 5% beträgt. Oberhalb dieser Wellenlänge steigt die Transmission im Form einer ersten Kante an und erreicht bei etwa 570 nm einen Wert zwischen 20 und 30%. Dieser Wert bleibt bis zu einer Wellenlänge von 640 nm in etwa konstant, steigt dann in Form einer zweiten Kante und erreicht bei etwa 700 nm seinen Endwert.

Eine nach diesem Beispiel eingefärbte Kontaktlinse hat also Durchläßigkeitsbereiche im grünen und im roten Teil des Spektrums und erhält damit einen braunen Farbton. Ein solcher Farbton ist kosmetisch sehr befriedigend, da beim Einsetzen der Kontaktlinse in das Auge des Patienten dessen Iris braun, d.h. in einer natürlichen Farbe erscheint. Die Linse ermöglicht dem Benutzer eine, wenn auch eingeschränkte Farberkennung und schützt zugleich die Stäbchen der Netzhaut vor schädlicher Strahlung. Streustrahlung von der Seite kann nicht in das Auge des Benutzers gelangen.

Im folgenden soll das Verfahren zum Färben einer weichen Kontaktlinse, z.B. aus Poly-2-hydroxymethylmetharcrylat beschrieben werden.

Zunächst wird durch Mischen verschiedener Reaktivfarben, wie sie z.B. unter der Handelsmarke "Remazol" von der Fa. Hoechst bezogen werden können, die gewünschten, in Vorversuchen spektral ausgetestete Farbmischung hergestellt. Da diese Farben wasserlöslich sind, wird eine wässrige Lösung hergestellt, deren Konzentration von der Farbsättigung abhängt, die man erreichen will. Diese Lösung wird auf eine Temperatur von etwa 50° C erwärmt.

Als nächstes wird eine Kontaktlinse in gebrauchsfertigem, d.h. gequollenen Zustand in ihrem Randbereich 2,3 zwischen zwei Kunststoff-Ringe eingespannt und für einige Minuten, beispielsweise für 10-15 min in das Farbbad getaucht. Die Farbe lagert sich dabei im Kontaktlinsenmaterial an, so daß nach Erreichen der gewünschten Farbsättigung die Linse nur aus dem Farbbad genommen und mit klarem Wasser gespült werden muß. Sie ist dann gebrauchsfertig.

Während des Tauchens diffundiert Farbe in den Randbereich 2, so daß dieser einen Übergangsbereich zum ungefärbten Rand 3 bildet.

In der beschriebenen Weise lassen sich weiche Kontaktlinsen einfärben. Die erwähnten Reaktivfarben sind für harte Kontaktlinsen nicht geeignet.

Harte Kontaktlinsen werden deshalb mit anderen Farben behandelt oder es wird der Zentralbereich 1 ausgestanzt und durch einen in der Masse gefärbten Kunststoff-Kern ersetzt.

Die in Fig. 2 dargestellte spektrale Transmissionskurve ist nur als Beispiel angegeben. Es lassen sich durch entsprechende Farbmischung auch andere Spektralverläufe verwirklichen.

Patentansprüche:

1. Bereichsweise gefärbte Kontaktlinse, dadurch gekennzeichnet, daß zur Verwendung bei Augen mit Retinis-Pigmentosaerkrankung der die Kornea des Auges bedeckende Linsenbereich (1) gleichmäßig so gefärbt ist, daß für Wellenlängen 520 nm die Transmission maximal 5% beträgt, danach mit Zunahme der Wellenlänge ansteigt und für Wellenlängen $>$660 nm mindestens 50% erreicht.

2. Kontaktlinse nach Anspruch 1, dadurch gekennzeichnet, daß außerhalb des die Kornea des Auges bedeckenden Linsenbereichs (1) die Farbsättigung graduell abnimmt und im Sklearal-Bereich (3) den Wert Null erreicht.

3. Kontaktlinse nach Anspruch 1 und 2, dadurch gekennzeichnet, daß die Transmission des gefärbten Bereiches (1) im Wellenlängenbereich von 520 - 580 nm auf einen Wert zwischen 20 und 30% ansteigt, dann im wesentlichen konstant bleibt, oberhalb 640 nm wieder steil ansteigt und schließlich für Wellenlängen$>$700 nm einen Endwert von mindestens 80% erreicht.

4. Verfahren zum Herstellen einer gefärbten Kontaktlinse nach den Ansprüchen 1 und 2, dadurch gekennzeichnet, daß eine farblose Kontaktlinse in ihrem Randbereich (2,3) zwischen zwei Ringen eingespannt und danach in ein Farbbad getaucht wird.

Fig.2

Fig.1

1/1

0204347